# EUROPÄISCHE PATENTSCHRIFT

(11) **EP 1 374 991 B1**
(45) Veröffentlichungstag und Bekanntmachung des Hinweises auf die Patenterteilung: **17.08.2011**
(21) Anmeldenummer: 03013729.3
(22) Anmeldetag: 17.06.2003
(51) Int. Cl.: B01J 19/12, B01F 15/06, B01F 9/02, B01F 11/00, B01F 9/00, H05B 6/80, B01J 37/34

(54) **Mischen und Reaktion von Feststoffen, Suspensionen oder Emulsionen in einem Mikrowellenfeld**
Mixing and reacting of solids, suspensions or emulsions in a microwave field
Mélangement et réactions de solides, suspensions et emulsions avec des micro-ondes

(30) Priorität: 21.06.2002 DE 10227836
(43) Veröffentlichungstag der Anmeldung: 02.01.2004
(73) Patentinhaber: Mikrowellen-Systeme MWS GmbH, 9435 Heerbrugg (CH)
(72) Erfinder: Lautenschläger, Werner, 88299 Leutkirch (DE)
(74) Vertreter: Rupp, Christian

(56) Entgegenhaltungen:
- EP-A- 0 628 330
- EP-A1- 1 034 840
- BE-A- 1 008 809
- DE-A- 19 518 540

## Beschreibung

Die vorliegende Erfindung bezieht sich auf ein Verfahren zum Mischen und zur Auslösung von chemischen Reaktionen von Feststoffen, Suspensionen oder Emulsionen in einem Mikrowellenfeld sowie auf die Verwendung eines solchen Verfahren zum Beschichten von Chromatographie-Trägermaterial oder zur Herstellung von Katalysatoren.

Aus der deutschen Offenlegungsschrift DE 199 35 305 A1 ist ein Verfahren zur Herstellung fester, stabiler Brenztraubensäure/Kohlenhydrat(-Derivat)-Aggregate bzw. von deren Hydraten bekannt. Dabei ist beschrieben, dass ein Gemenge aus Brenztraubensäure(-Lösungen) und festen Kohlenhydrat(-Derivaten) im Temperaturbereich von -20 bis 120°C einer thermischen Behandlung, einer Behandlung mit Ultraschall oder Mikrowelle unterzogen wird und dies zur Bildung homogener Aggregate führt.

Die vorliegende Erfindung bezieht sich ganz allgemein auf mikrowellen-unterstützte chemische Prozesse. Aus der EP 0 628 330 A1 "Schräger Rotationsverdampfer" ist dabei ein Rotationsverdampfer bekannt, bei dem die Erhitzung eines Verdampfungsstoffes durch Mikrowellen in einer Bestrahlungskammer eines Mikrowellen-Heizgerätes erfolgt, wobei sich nur der Halter und das Gefäß in der Heizkammer befinden.

Durch die Rotation des Gefäßes um eine schräge Achse erfolgt gemäß der EP 0 628 330 A1 eine Benetzung der Innenwandung des Gefäßes mit dem flüssigen Verdampfungsstoff. Dabei ist die Gefäßform vorzugsweise derart gewählt, dass sich eine möglichst große, durch die Rotation bewirkte Benetzungsfläche ergibt. Die rationelle Verdampfung wird einerseits durch diese Benetzung und andererseits durch die Bestrahlung des Verdampfungsstoffes im Bereich der Flüssigkeitsansammlung und im Bereich der Benetzungsanteile erreicht.

Der Drehantrieb ist außerhalb der Heizkammer angeordnet, wobei der Halter sich vorzugsweise schräg nach unten durch die Wandung der Heizkammer in diese hinein erstreckt. Wenigstens eine Zuführung- und auch Abführungsleitung für beispielsweise eine kontinuierliche Zuführung des Verdampfungsstoffes oder ggf. auch eines Probenstoffes und eines Reagenzmittels unter Abführung von Dampf können sich vorzugsweise längs .auf den Halter erstrecken. Hierdurch bleibt nicht nur die Rotation des Halters bzw. des Gefäßes unbeeinträchtigt, sondern es bedarf auch keiner weiteren Durchführungsöffnungen im die Heizkammer umgebenden Gehäuse. Aufgrund der Anordnung des Drehantriebs außerhalb der Heizkammer ist dieser von Beeinträchtigungen durch die Mikrowellen geschützt angeordnet.

Die Drehbewegung dient also gemäß der EP 0 628 330 A1 zur Vergrößerung der Flüssigkeitsoberfläche. Ein Mischvorgang wird indessen durch die Drehung nicht effektiv ausgelöst, da nur eine schwache Wechselwirkung an der Grenzschicht zwischen der Behälterwand und der Flüssigkeit stattfindet. Für ein wirksames Mischen wäre im Gegensatz dazu die Verwendung eines anderen Mechanismus angezeigt. Beispielsweise würde sich hierfür ein Magnetrührer eignen.

Die vorliegende Erfindung bildet nunmehr diese bekannte Vorrichtung hinsichtlich des Verfahrensablaufs, für die Feststoffsynthese im Mikrowellenfeld weiter. Bei der Feststoffsynthese, bei der beispielsweise pulverförmige Feststoffgemische, Suspensionen oder Emulsion miteinander zur Reaktion gebracht werden, ist eine homogene Suspension bzw. Verteilung der Feststoffe von großer Bedeutung für einen ordnungsgemäßen Prozessablauf. Dieses Problem der besonders homogenen Verteilung tritt naturgemäss bei einem reinen Verdampfungsprozess allenfalls in stark verringertem Umfang auf.

Indessen können bekannte mechanische Rührer die hohen Anforderungen bei mikrowellen-unterstützten chemischen Prozessen bez. der Homogenität der Gemische nicht erfüllen. Der Grund dafür ist, dass bei der Einstrahlung von Mikrowellen in Festkörpern diese von innen her und somit inhomogen aufgeheizt werden. Der Grund dafür wiederum ist, dass sich die äußeren Bereiche in einem ständigen Wärmetausch mit der umgebenden Atmosphäre befinden und daher eine niedrigere Temperatur als der innere Bereich aufweisen. Somit muss eine besonders gute homogene Durchmischung vorliegen, um einen gleichmäßigen Reaktionsablauf zu garantieren und insbesondere lokale Überhitzungen in der Probe zu vermeiden.

Ein weiteres Problem mechanischer Rührer ist es, dass damit nur schwerlich eine parallele Verarbeitung mehrerer Reagenzgläser in einem Prozessablauf erfolgen kann, da ja in den verschiedenen Reagenzgläsern, in denen die Proben aufgenommen werden, je ein Rührer eintauchen müsste. Es ist aber in der beispielsweise kombinatorischen Analytik oft der Fall, dass bis zu 96 Reagenzgläser gleichzeitig verwendet werden, was ganz offensichtlich die wirtschaftlich realisierbaren Möglichkeiten der mechanischen Rührer übersteigt.

Ein weiterer Gesichtspunkt, der bei mikrowellen-unterstützten chemischen Abläufen immer im Auge behalten werden muss, ist es, dass sich im Mikrowellenraum des Heizgeräts durch Reflexionen Bereiche mit höherer Mikrowellenleistung und entsprechend Bereiche mit niedriger Mikrowellenleistung ausbilden. Um daher zu vermeiden, dass sich aufgrund dieser inhomogenen Mikrowellenleistungsverteilung im Mikrowellenraum inhomogene Temperaturverteilungen ergeben, ist dafür zu sorgen, dass die Probe bzw. die Proben Bereiche unterschiedlicher Leistung während des Prozessablaufs erreichen, so dass im zeitlichen Mittel eine für sämtliche Proben gleiche Mikrowellenleistungszufuhr ergibt.

Die Erfindung hat daher zur Aufgabe, eine Technologie zur Auslösung von chemischen Reaktionen von Feststoffen, Suspensionen oder Emulsionen in einem Mikrowellenfeld bereit zu stellen, bei der gleichzeitig
- eine homogene Mischung der Feststoffe, Suspensionen oder Emulsionen, und
- eine homogene Mikrowelleneinstrahlung auf die Probe (N) gewährleistet sind.

In besonders vorteilhafter Weise werden diese beiden Anforderungen gemäß der vorliegenden Erfindung durch eine einzige Maßnahme wie folgt gelöst:

Um chemische Reaktionen von Feststoffen, Suspensionen oder Emulsionen in einem Mikrowellenfeld auszulösen, werden die Feststoffe, Suspensionen oder Emulsionen in einen mikrowellen-transparenten Behälter gegeben. Dieser mikrowellen-transparente Behälter wird dann unter Einwirkung einer Mikrowellenstrahlung gedreht, wobei die Drehachse bezüglich der Senkrechten um einen festen oder auch veränderbaren (einstellbaren) Winkel geneigt ist zum homogenen Mischen der eingebrachten Feststoffe, Suspensionen oder Emulsionen. Beispielsweise kann also die Drehachse auch waagerecht oder näherungsweise waagerecht orientiert sein. Dadurch kann der Mischvorgang besonders effektiv betrieben werden.

Durch das Drehen des Behälters mit der bezüglich der Senkrechten geneigten Drehachse wird einerseits dafür gesorgt, dass die Feststoffe, Suspensionen oder Emulsionen Bereiche unterschiedlicher Mikrowellenleistung erreichen und somit homogen erwärmt werden. Gleichzeitig wird dadurch, dass sich die bezüglich des Behälters in einem spitzen Winkel geneigte Oberfläche der Feststoffgemische, Suspensionen oder Emulsionen ständig bezüglich der Behälterwand dreht, eine ausreichend homogene Vermischung der genannten Stoffe erreicht. Durch die Drehbewegung des Behälters wird sozusagen ein permanentes Überkopfmischen vollzogen und auf diese Weise eine extrem gute homogene Mischung und somit eine homogene Reaktion bewirkt.

Im Gegensatz zu den bekannten Abdampftechniken werden also bei der vorliegenden Erfindung wenigstens zwei Stoffe miteinander durchmischt, die dann zur Reaktion miteinander gebracht werden sollen. Erstmals wird also das Drehen mit schrägstehender Drehachse zum Mischen und nicht nur zur Vergrösserung der Oberfläche verwendet, wie es bei dem Verdampfen allein der Fall ist. Ein erfindungsgemässes Gerät könnte daher auch als ein "Schrägstehender Mischer im Mikrowellenfeld" bezeichnet werden.

Eine besonders gute homogene Einstrahlung der Mikrowellenleistung und auch -vermischung wird erreicht, indem sich der die Stoffe aufnehmende Behälter während der Einstrahlung der Mikrowelle exzentrisch dreht. Dadurch wird der von dem Behälter durchlaufene Bereich im Vergleich zu einer Drehung um seine Symmetrieachse vergrößert.

Bei dem erfindungsgemäßen Verfahren ist weiterhin zu erwähnen, dass die Reaktion auch zum Beschichten aus flüssigen Medien auf Trägermaterialien, Umsetzung von reinen Feststoffen und zur Herstellung von Katalysatoren genutzt werden kann.

Ferner ist als Vorteil zu erwähnen, dass man bei dem erfindungsgemäßen Verfahren nicht auf einen Erwärmungseffekt aufgrund von Hydratwasser angewiesen ist.

Das Verfahren kann dabei lösemittelfrei bzw. unter Verwendung schwach polarer Lösemittel (bspw. Wasser) im Fall von Suspensionen oder Emulsionen ausgeführt werden.

Die exzentrische Drehung des die Stoffe aufnehmenden Behälters während der Einstrahlung der Mikrowelle kann beispielsweise dadurch erreicht werden, dass die Stoffe, die zur chemischen Reaktion gebracht werden sollen, in einen ersten Behälter eingesetzt sind, der wiederum in einen größeren zweiten Behälter eingesetzt wird. Der erste, die Stoffe aufnehmende Behälter wird dabei exzentrisch in den zweiten Behälter aufgenommen, wobei der zweite Behälter um seine Mittenachse (die bez. der Senkrechten geneigt ist) gedreht wird.

Grundsätzlich ist aber auch möglich, die zur Reaktion zu bringenden Stoffe in einen Behälter zu geben, der mittels eines sich drehenden Halters mit geneigter Drehachse gehaltert ist.

Der Behälter, in dem die Feststoffe, Suspensionen oder Emulsionen gegeben werden, kann mit einem inerten Gas oder aber auch mit einem Reaktionsgas gespült werden.

Besonders vorteilhaft ist, wenn der Behälter, in dem die Stoffe vorliegen, bzw. der diesen wenigstens einen ersten Behälter aufnehmende zweite Behälter, während der Drehung nur in dem oberen, von dem Boden abgewandten Bereich gehalten wird und im übrigen frei steht.

Der erste Behälter bzw. der zweite Behälter kann dabei einen Deckel aufweisen, der mit dem jeweiligen Behälter fest verbunden ist und während der Drehung mittels Vakuum nach oben weggezogen und somit gehalten wird.

Die Feststoffe können beispielsweise ein pulverförmiges Molekularsieb und Mittel zur Beschichtung der aktiven Oberfläche des Molekularsiebs sein.

Es kann insbesondere eine pulverförmiges Gemisch von Feststoffen verwendet werden.

Wenn mehrere Behälter verwendet werden, können diese kreisförmig um die geneigte Drehachse herum angeordnet sein, was wiederum für eine besonders vorteilhafte exzentrische Drehbewegung sorgt.

Gemäß weiteren Aspekten der Erfindung ist die Verwendung eines derartigen Verfahrens für das Beschichten von Chromatographie-Trägermaterial bzw. für die Herstellung von Katalysatoren vorgesehen.

Vorzugsweise kann das Verfahren ein zweistufiges Verfahren zur Auslösung von chemischen Reaktionen von Feststoffen, Suspensionen oder Emulsionen in einem Mikrowellenfeld sein. Dabei weist der erste Schritt vorzugsweise die folgenden Schritte auf: zuerst wird ein erster Feststoff in einen mikrowellen-transparenten Behälter eingebracht und dann durch Mikrowellenbestrahlung erwärmt. Danach wird ein weiterer Feststoff in den Behälter hinzugegeben und der Behälter unter Einwirkung einer Mikrowellenstrahlung erfindungsgemäß gedreht.

Der erste Feststoff kann ein Molekularsieb sein, dessen Oberfläche durch das Erwärmen aktiviert. Der weitere Feststoff kann ein pulverförmiges Metall sein, das durch die chemische Reaktion die derart aktivierte Oberfläche des Molekularsiebs bezieht bzw. beschichtet.

Der weitere Feststoff kann insbesondere in einer wasserdampffreien Umgebung in den Behälter eingebracht werden.

Die Mikrowellenleistung kann dabei bei dem Schritt der Erwärmung niedriger gewählt werden als in dem Schritt der Auslösung der chemischen Reaktion.

Weitere Merkmale, Vorteile und Eigenschaften der vorliegenden Erfindung sollen nunmehr Bezug nehmend auf die Figuren der begleitenden Zeichnungen und unter Erläuterungen bevorzugter Ausführungsbeispiele näher ersichtlich werden.
- Fig. 1: zeigt ein Mikrowellen-Heizgerät in der Vorderansicht und in schematischer Darstellung, und
- Fig. 2 und 3: zeigen abgewandelte Ausführungen dieses Geräts.

Die Hauptteile des Geräts 1 sind ein sich vorzugsweise im Sinne eines geraden Armes erstreckender Halter 2 zum Halten eines topfförmigen Behälters oder Gefäßes 3, oder eines Halters für Gefässe, ein Ständer 4, an dem der Halter 2 um seine Längsachse drehbar gelagert ist, ein Drehantrieb 5, zum Drehen des Halters 2 um seine Längsachse im Sinne einer kontinuierlichen Drehung oder einer Schwenkbewegung mit periodisch wechselnder Drehrichtung, eine optionale Absaugleitung 6 und ein Mikrowellengerät 7 zum Auslösen von Reaktionen von Stoffen in dem Gefäß 3.

Wie dargestellt ist die Drehachse des Gefäßes 3 bezüglich der Senkrechten beispielsweise um 45° geneigt, so dass die Oberfläche der pulverförmigen Feststoffgemische, Emulsionen oder Suspensionen in dem Gefäß 3 ebenfalls einen Winkel zu der Bodenfläche des Gefäßes 3 einschließt. Beim Drehen des Gefäßes 3 wird somit die durch die Schrägstellung vergrösserte Oberfläche laufend bezüglich der Wand des Gefäßes 3 durchgedreht.

Das Mikrowellenheizgerät 7 weist einen Heizraum 8 auf, der allseitig von einem beim vorliegenden Ausführungsbeispiel quaderförmigen Gehäuse 9 umgeben ist, dem an seiner Frontseite eine Tür (nicht dargestellt) zum wahlweisen Öffnen und Schließen zugeordnet ist. Das Heizgerät 7 umfasst ferner einen Mikrowellengenerator 11, der nach Einschaltung durch eine Einkopplungsvorrichtung 12 Mikrowellen in den Heizraum 8 einkoppelt. Wie später im Detail erläutert kann der Mikrowellengenerator 11 durch eine Recheneinrichtung angesteuert werden.

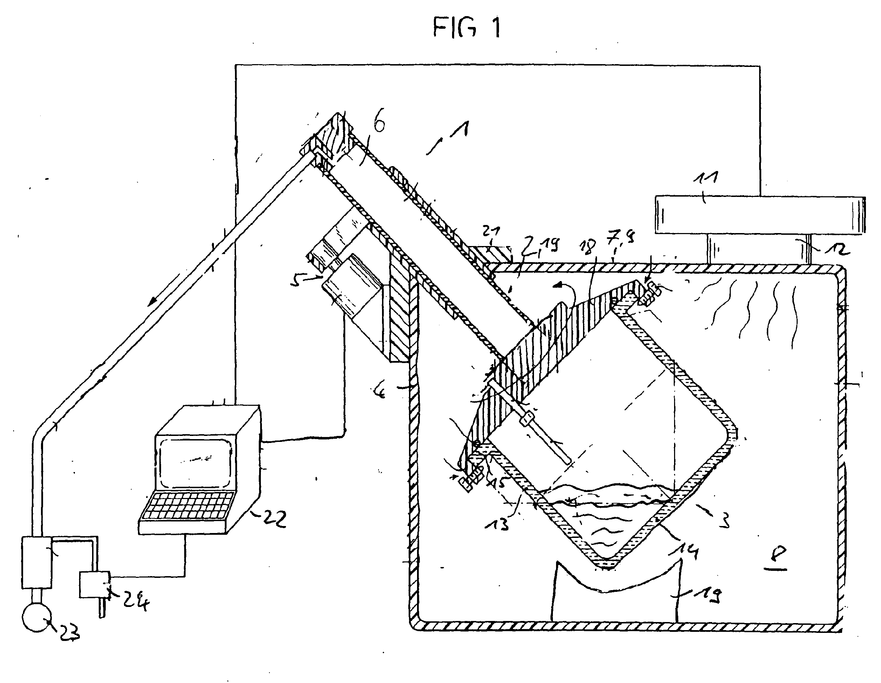

Das Gefäß 3 ist beim Ausführungsbeispiel gemäß Fig. 1 topfförmig mit einer hohlzylindrischen Umfangswand 13, einem im wesentlichen ebenen oder alternativ abgerundeten Boden 14 und einem am oberen Rand der Umfangswand 13 nach außen ragenden Randflansch 15 ausgebildet. Das Gefäß 3 besteht aus mikrowellen-transparentem Material, wie beispielsweise Glas, Quarz oder Kunststoff.

Der Halter 2 besteht aus einem flanschförmigen, geschlossenen Deckel 18 und einer Lagerwelle 19, die sich im hier linken oberen Eckenbereich des Gehäuses 9 durch eine winkelförmige Verstärkung 21 für das Gehäuse 9 und durch dessen Wandung in den Heizraum 8 erstreckt. Im vorliegenden Beispiel wird das Gefäß 3 während des eigentlichen Betriebs dadurch gehalten, dass ein Unterdruck in der Absaugleitung 6 erzeugt wird, somit der Deckel 18 angesaugt wird und dadurch das Gefäß 3 insgesamt gehalten wird. Nach dem Ende des Prozesses wird das Vakuum in der Absaugleitung 6 heruntergefahren, so dass sich die Ansaugwirkung abschwächt und das Gefäß 3 schließlich unter gleichzeitigem Lösen von dem Halter 2 auf einen Ständer 19 absinkt.

Der dargestellte Ständer 19 ist auf dem Boden des Heizraums des Mikrowellen-Geräts befestigt und gemäss diesem Beispiel zweiteilig ausgebildet, wobei jedes Teil des Ständers 19 eine abgeschrägte Oberseite mit jeweils unterschiedlicher Neigung aufweist, so dass das Gefäss 3 trichterartig zentriert sicher gehalten werden kann.

Eine Computereinrichtung 22 steuert die Drehung des Drehantriebs, den Mikrowellengenerator 11, eine Pumpe 23 zum Absaugen der Leitung 6 sowie ein Ventil 24 an, um gemäß vorgegebenen Prozessschritten wieder Luft in die Leitung einströmen zu lassen.

Anstelle der Halterung mittels der Vakuumwirkung in dem Rohr 6 kann natürlich auch das Gehäuse 3 selbst bzw. der Deckel 18 mittels einer Verschraubung, einem Schnellverschluss oder dgl. gehalten werden.

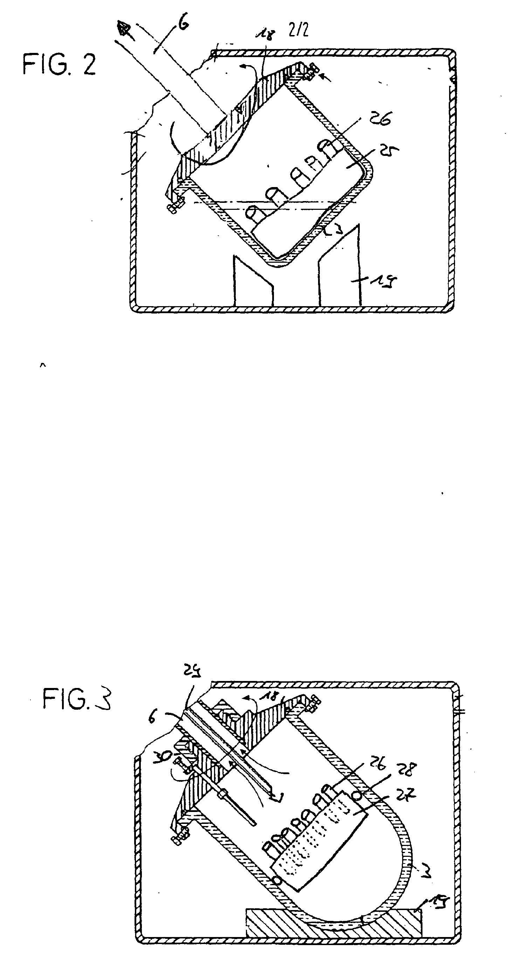

In Fig. 2 ist ein weiteres Ausführungsbeispiel der Fig. gezeigt. Gemäß diesem Ausführungsbeispiel ist in das Hauptgefäß 3 ein Halter 25 eingesetzt. Dieser Halter nimmt weitere Behälter, wie beispielsweise Reagenzgläser 26 auf. Diese Reagenzgläser 26 können insbesondere kreisförmig um die Symmetrieachse des Hauptbehälters 3 herum angeordnet sein, wodurch sich die von den Reagenzgläsern im Zuge der Drehbewegung durchstrichene Fläche in vorteilhafter Weise vergrössert. Somit führt jede der Proben eine Kreisbewegung um die Symmetrieachse des Hauptgefäßes 3 herum aus, was für eine besonders gute homogene Durchmischung sowie Durchstreichen unterschiedlicher hoher Mikrowellenleistungen in dem Heizraum sorgt.

Während der in Fig. 2 gezeigte Halter in dem Boden des Hauptgefäßes 3 eingesetzt ist, zeigt Fig. 3 ein Ausführungsbeispiel, bei dem ein Halter 27 für die Reagenzgläser 26 mittels eines O-Rings 28 oder dgl. in das Hauptgefäß 3 eingepasst und gehaltert ist.

Gemäß dem Ausführungsbeispiel von Fig. 3 ist weiterhin zu bemerken, dass das Gefäß durch eine mechanische Bewegung des Drehlagers 2 auf den Halter 19 gesetzt werden kann. Darüber hinaus ist es möglich, mittels einer zusätzlichen Leitung 29 in der Absaugleitung 6 ein Gas durch den Deckel 18 hindurch in den Hauptbehälter 3 einzuführen. Dieses Gas kann entweder ein inertes Gas wie beispielsweise ein Edelgas, oder aber auch ein Reaktionsgas wie beispielsweise Wasserstoff sein. Um eine vollständige Spülung zu erreichen, geht in diesem Beispiel die Absaugleitung 6 vollständig durch den Deckel 18 hindurch, um Gas aus dem Inneren des Hauptgefäßes 3 abzusaugen und somit für eine Durchströmung mit dem entsprechenden Gas zu sorgen.

Dementsprechend ist auch in Fig. 3 der Deckel 18 beispielsweise mittels eines Flansches und einer Schraubverbindung 30 fest mit dem Drehlager 2 und der Absaugleitung 6 verbunden.

Wie bereits ausgeführt, können die in dem Behälter 3 bzw. den weiteren Behältern 26 vorliegenden Stoffe pulverförmige Feststoffgemische, Suspensionen oder Emulsionen sein. Wenigstens zwei Stoffe sollen also miteinander vermischt und zur Reaktion gebracht werden. Bei der Verwendung von Suspensionen können unpolare bzw. schwachpolare Lösemittel mit hoher Mikrowellen-Transparenz verwendet werden. Der schrägstehende Behälter 3 bzw. das schrägstehende Behältersystem (für den Fall, dass weitere Behälter 26 in dem Hauptbehälter 3 vorgesehen sind) garantiert eine homogene Reaktion und verhindert insbesondere lokale Überhitzungen in den Proben. Die die Reaktion auslösende Mikrowellenstrahlung durchdringt das Vakuum bzw. das Gas im Behälter 3 und erreicht somit eine homogene Erwärmung sämtlicher Behälter.

Im übrigen ist die Mikrowellenleistung so gewählt, dass die Stoffe ausreichend für eine Reaktion miteinander erhitzt werden.

Gemäß dem Ausführungsbeispiel von Fig. 1 wird der Behälter 3 unter leichtem Vakuum gehalten, um durch die Ansaugung seines Deckels 18 eine Verbindung mit der Drehachse 2 zu gewährleisten. Diese Vakuumabsaugung hat also reine Haltefunktion. Alternativ kann diese Haltefunktion natürlich auch beispielsweise mittels der in Fig. 3 gezeigten Flanschverschraubung erfolgen. In diesem Fall ist entsprechend keine Vakuumabsaugung nötig.

Für den Fall, dass während der Reaktion ein Überdruck im Hauptbehälter entstehen kann, ist entsprechend eine druckfeste Verschraubung des Deckels 18 mit dem Behälter 3 vorzusehen. Für den Fall, dass weitere Behälter 26 in dem Hauptbehälter 3 verwendet werden, können auch diese weiteren Behälter 26 mit druckfesten Verschlüssen versehen werden.

Der Halter 25 bzw. 27 kann beispielsweise aus PTFE-Material bestehen, in das entsprechende Bohrungen vorgesehen sind.

Wenn die mehreren Behälter 26 vorgesehen sind, kann durch einen einzigen Prozess eine Parallelsynthese/Reaktion durchgeführt werden.

Weiterer Vorteil des Schrägstellens des Behälters 3 bez. der Vertikalen ist es, dass dadurch die Oberfläche der flüssigen Phase im Fall von Suspensionen und Emulsionen bzw. die Oberfläche der Pulvergemische im Reagenzbehälter vergrößert wird.

Die vorliegende Erfindung hat zahlreiche Verwendungsmöglichkeiten. Ein Beispiel ist das Herstellen von Katalysatoren. Dabei werden poröse, schwammartige Molekularsiebe wie bspw. Zeolith sowie ein Beschichtungsmittel, wie beispielsweise Gold oder Palladium, in den Behälter 3 bzw. die Behälter 26 eingebracht. Durch Einstrahlen der Mikrowellenstrahlung unter gleichzeitigem Drehen kann eine homogene Oberflächenbeschichtung der Molekularsiebe erreicht werden.

Eine chemische Reaktion im Sinne der vorliegenden Erfindung ist auch das Aktivieren, d. h. das leichte Erwärmen von Stoffen, um Substanzen wie bspw. Wasser von der Oberfläche der Stoffe zu entfernen, da diese Substanzen die aktive Oberfläche beispielsweise der Molekularsiebe der Katalysatoren blockieren können. In einem ersten Schritt werden also die Molekularsiebe leicht erwärmt. Nach diesem Aktivieren kann in einem weiteren Schritt in einer wasserfreien Atmosphäre ein Beschichtungsmittel hinzugegeben werden. Schließlich erfolgt dann unter starker Mikrowelleneinstrahlung eine Bindung des Beschichtungsmittels an der aktiven Oberfläche. Diese Bindung des Beschichtungsmittels an der aktiven Oberfläche ist ebenfalls eine chemische Reaktion im Sinne der vorliegenden Erfindung.

Ein weiterer Verwendungsfall der vorliegenden Erfindung ist das Beschichten von Trägermaterial wie bspw. Kieselgel für die Dünnschicht-Chromatographie.

## Patentansprüche

1. Verfahren zum Mischen und zur Auslösung von chemischen Reaktionen von Feststoffen, Suspensionen oder Emulsionen in einem Mikrowellenfeld,
wobei das Verfahren die folgenden Schritte aufweist:
- Einbringen der Feststoffe, Emulsionen oder Suspensionen in einen mikrowellen-transparenten Behälter (3),
- Drehen des Behälters (3) unter Einwirkung einer Mikrowellenstrahlung, wobei die Drehachse bezüglich der Senkrechten um einen Winkel geneigt ist zum homogenen Mischen der eingebrachten Feststoffe, Suspensionen oder Emulsionen, und wobei der Behälter während der Einstrahlung der Mikrowelle exzentrisch dreht, und **dadurch**
- Auslösen einer chemischen Reaktion der eingebrachten Feststoffe, Emulsionen oder Suspensionen.

2. Verfahren nach Anspruch 1,
**dadurch gekennzeichnet,**
**dass** das Verfahren lösemittelfrei oder unter Verwendung schwach polarer Lösemittel ausgeführt wird.

3. Verfahren nach einem der vorhergehenden Ansprüche,
**dadurch gekennzeichnet,**
**dass** der Behälter (3) während der Einstrahlung der Mikrowellenleistung auf einer Kreisbahn um die Drehachse geführt wird.

4. Verfahren nach einem der vorhergehenden Ansprüche,
**dadurch gekennzeichnet,**
**dass** der Behälter (26) in einen weiteren Behälter (3) eingesetzt ist.

5. Verfahren nach einem der vorhergehenden Ansprüche,
**dadurch gekennzeichnet,**
**dass** der Behälter (3), in den die Feststoffe gegeben sind oder die Suspension oder Emulsion gegeben ist, mit einem inerten Gas gespült wird.

6. Verfahren nach einem der Ansprüche 1 bis 4,
**dadurch gekennzeichnet,**
**dass** in den Behälter (3), in den die Feststoffe gegeben sind oder die Suspension oder Emulsion gegeben ist, ein Reaktionsgas zugeführt wird.

7. Verfahren nach einem der vorhergehenden Ansprüche,
**dadurch gekennzeichnet,**
**dass** der Behälter (3), in dem die Feststoffe vorliegen oder die Suspension oder Emulsion vorliegt, oder - falls der Behälter (26) in einen weiteren Behälter (3) eingesetzt ist, der weitere Behälter (3) - während der Drehung nur in seinem oberen, von seinem Boden (14) abgewandten Bereich gehalten wird und im übrigen frei ist.

8. Verfahren nach Anspruch 7,
**dadurch gekennzeichnet,**
**dass** der Behälter (3) oder - falls der Behälter (26) in einen weiteren Behälter (3) eingesetzt ist, der weitere Behälter (3) - einen Deckel (18) aufweist, der mit dem jeweiligen Behälter (3) fest verbunden ist und dass während der Drehung mittels Vakuum der Deckel (18) und der damit verbundene Behälter (3) gehalten wird.

9. Verfahren nach einem der vorhergehenden Ansprüche,
**dadurch gekennzeichnet,**
**dass** die Feststoffe ein pulverförmiges Molekularsieb und
ein Mittel zur Beschichtung der aktiven Oberfläche des Molekularsiebs sind.

10. Verfahren nach einem der vorhergehenden Ansprüche,
**dadurch gekennzeichnet,**
**dass** ein pulverförmiges Gemisch von Feststoffen verwendet wird.

11. Verfahren nach einem der vorhergehenden Ansprüche,
**dadurch gekennzeichnet,**
**dass** mehrere Behälter (26) verwendet werden, die mittels einer Haltevorrichtung (27, 28) kreisförmig um die Drehachse herum angeordnet sind.

12. Verwendung eines Verfahrens nach einem der vorhergehenden Ansprüche für das Beschichten von Chromatographie-Trägermaterial.

13. Verwendung eines Verfahrens nach einem der vorhergehenden Ansprüche für die Herstellung von Katalysatoren.

14. Verfahren nach einem der Ansprüche 1 bis 11, wobei das Verfahren ein zweistufiges Verfahren ist und der erste Schritt die folgenden Schritte aufweist:
- Einbringen eines ersten Feststoffs in den mikrowellen-transparenten Behälter (3),
- Erwärmen des Feststoffs durch Mikrowellenbestrahlung,
- Hinzugeben eines weiteren Feststoffs in den Behälter (3).

15. Verfahren nach Anspruch 14,
**dadurch gekennzeichnet,**
**dass** der erste Feststoff ein Molekularsieb, dessen Oberfläche durch das Erwärmen aktiviert wird, und der weitere Feststoff ein Metall ist, das durch die chemische Reaktion die derart aktivierte Oberfläche des
Molekularsiebs beschichtet.

16. Verfahren nach Anspruch 14 oder 15,
**dadurch gekennzeichnet,**
**dass** der weitere Feststoff in einer wasserdampf-freien Umgebung in den Behälter (3) eingebracht wird.

17. Verfahren nach einem der Ansprüche 14 bis 16,
**dadurch gekennzeichnet,**
**dass** die Mikrowellenleistung in dem Schritt der Erwärmung niedriger ist als in dem Schritt der Auslösung der chemischen Reaktion.

## Claims

1. Method for mixing and initiating chemical reactions of solids, suspensions or emulsions in a microwave field,
the method comprising the following steps:
- placing the solids, emulsions or suspensions in a container (3) transparent to microwaves,
- rotating the container (3) while applying microwave radiation, the rotation axis being inclined at an angle to the perpendicular for homogeneous mixing of the solids, suspensions or emulsions introduced, and the container rotating eccentrically during the microwave irradiation, and thereby
- initiating a chemical reaction of the solids, suspensions or emulsions introduced.

2. Method according to claim 1, **characterised in that** the method is carried out without any solvent or using weakly polar solvents.

3. Method according to one of the preceding claims, **characterised in that** during the irradiation by microwave power the container (3) is guided on a circular path about the rotation axis.

4. Method according to one of the preceding claims, **characterised in that** the container (26) is placed in a further container (3).

5. Method according to one of the preceding claims, **characterised in that** the container (3) in which the solids are placed or in which the suspension or emulsion is placed is purged with an inert gas.

6. Method according to one of claims 1 to 4, **characterised in that** a reaction gas is introduced into the container (3) in which the solids are placed or in which the suspension or emulsion is placed.

7. Method according to one of the preceding claims, **characterised in that** the container (3) in which the solids are present or the suspension or emulsion is present, or - if the container (26) is placed in a further container (3), the further container (3) - is held during the rotation only at its upper part remote from its base (14) and is otherwise free.

8. Method according to claim 7, **characterised in that** the container (3) or - if the container (26) is placed in a further container (3), the further container (3) - has a lid (18) which is fixedly connected to the respective container (3), and **in that** during the rotation the lid (18) and the container (3) attached thereto is held by vacuum.

9. Method according to one of the preceding claims, **characterised in that** the solids are a powdered molecular sieve and a means for coating the active surface of the molecular sieve.

10. Method according to one of the preceding claims, **characterised in that** a powdered mixture of solids is used.

11. Method according to one of the preceding claims, **characterised in that** a plurality of containers (26) are used which are arranged in a circle about the rotation axis by means of a holding device (27, 28).

12. Use of a method according to one of the preceding claims for coating chromatographic carrier material.

13. Use of a method according to one of the preceding claims for producing catalysts.

14. Method according to one of claims 1 to 11, the method being a two-stage method and the first stage comprising the following steps:
- placing a first solid in the container (3) that is transparent to microwaves,
- heating the solid by microwave irradiation,
- adding a further solid to the container (3).

15. Method according to claim 14, **characterised in that** the first solid is a molecular sieve the surface of which is activated by the heating, and the further solid is a metal which as a result of the chemical reaction coats the surface of the molecular sieve which has thus been activated.

16. Method according to claim 14 or 15, **characterised in that** the further solid is placed in the container (3) in a steam-free environment.

17. Method according to one of claims 14 to 16, **characterised in that** the microwave power is lower in the heating step than in the step of initiating the chemical reaction.

## Revendications

1. Procédé pour mélanger et pour déclencher des réactions chimiques de matières solides, de suspensions ou d'émulsions dans un champ de micro-ondes, dans lequel le procédé présente les étapes suivantes :
- mise en place des matières solides, émulsions ou suspensions dans un compartiment transparent aux micro-ondes (3),
- rotation du compartiment (3) sous l'influence d'un rayonnement à micro-ondes, dans lequel l'axe de rotation est incliné en angle par rapport à la verticale pour un mélange homogène des matières solides, des suspensions ou des émulsions mises en place, et dans lequel le compartiment tourne de façon excentrique pendant la radiation micro-onde, et ainsi
- déclenchement d'une réaction chimique des matières solides, des émulsions ou des suspensions mises en place.

2. Procédé selon la revendication 1, **caractérisé en ce que** le procédé est réalisé sans solvants ou en utilisant des solvants faiblement polaires.

3. Procédé selon l'une des revendications précédentes, **caractérisé en ce que** le compartiment (3) est guidé, pendant la radiation de la puissance micro-onde, sur une trajectoire circulaire autour de l'axe de rotation.

4. Procédé selon l'une des revendications précédentes, **caractérisé en ce que** le compartiment (26) est posé dans un autre compartiment (3).

5. Procédé selon l'une des revendications précédentes, **caractérisé en ce que** le compartiment (3) dans lequel se trouvent les matières solides ou se trouve la suspension ou l'émulsion, est rincé avec un gaz inerte.

6. Procédé selon l'une des revendications 1 à 4, **caractérisé en ce que** dans le compartiment (3) dans lequel se trouvent les matières solides ou se trouve la suspension ou l'émulsion, est amené un gaz de réaction.

7. Procédé selon l'une des revendications précédentes, **caractérisé en ce que** le compartiment (3) dans lequel se trouvent les matières solides ou se trouve la suspension ou l'émulsion, ou - au cas où le compartiment (26) est mis en place dans un autre compartiment (3), l'autre compartiment (3) - pendant la rotation est maintenu uniquement dans sa zone supérieure, opposée à son fond (14) et est libre pour le reste.

8. Procédé selon la revendication 7, **caractérisé en ce que** le compartiment (3) ou - si le compartiment (26) est mis en place dans un autre compartiment (3), l'autre compartiment (3) - présente un couvercle (18), qui est relié solidement au compartiment respectif (3) et **en ce que** pendant la rotation à l'aide du vide le couvercle (18) et le compartiment ainsi relié (3) est maintenu.

9. Procédé selon l'une des revendications précédentes, **caractérisé en ce que** les matières solides sont un tamis moléculaire pulvérulent et un milieu pour l'enduction de la surface active du tamis moléculaire.

10. Procédé selon l'une des revendications précédentes, **caractérisé en ce qu'**un mélange pulvérulent de matières solides est utilisé.

11. Procédé selon l'une des revendications précédentes, **caractérisé en ce que** plusieurs compartiments (26) sont utilisés, qui sont disposés à l'aide d'un dispositif de retenue (27, 28) en forme de cercle autour de l'axe de rotation.

12. Utilisation d'un procédé selon l'une des revendications précédentes pour l'enduction d'un substrat de chromatographie.

13. Utilisation d'un procédé selon l'une des revendications précédentes pour la fabrication de catalyseurs.

14. Procédé selon l'une des revendications 1 à 11, dans lequel le procédé est un procédé en deux étapes et la première étape présente les étapes suivantes :
- mise en place d'une première matière solide dans le compartiment transparent aux micro-ondes (3),
- réchauffement de la matière solide par rayonnement à micro-ondes,
- ajout d'une autre matière solide dans le compartiment (3).

15. Procédé selon la revendication 14, **caractérisé en ce que** la première matière solide est un tamis moléculaire, dont la surface est activée par l'échauffement, et l'autre matière solide est un métal qui enduit par la réaction chimique la surface ainsi activée du tamis moléculaire.

16. Procédé selon la revendication 14 ou 15, **caractérisé en ce que** l'autre matière solide est mise en place dans le compartiment (3) dans un environnement exempt de vapeur d'eau.

17. Procédé selon l'une des revendications 14 à 16, **caractérisé en ce que** la puissance micro-onde est plus basse à l'étape de l'échauffement qu'à l'étape du déclenchement de la réaction chimique.
